Europäisches Patentamt

European Patent Office

Office européen des brevets

(19)

(11) Numéro de publication : **0 042 345 B1**

(12) **FASCICULE DE BREVET EUROPÉEN**

(45) Date de publication du fascicule du brevet :
05.10.83

(21) Numéro de dépôt : 81400960.1

(22) Date de dépôt : 16.06.81

(51) Int. Cl.³ : **F 04 D 29/04, F 16 C 32/06**

(54) **Palier hydrostatique à sécurité de fonctionnement pour une pompe.**

(30) Priorité : 17.06.80 FR 8013398

(43) Date de publication de la demande :
23.12.81 Bulletin 81/51

(45) Mention de la délivrance du brevet :
05.10.83 Bulletin 83/40

(84) Etats contractants désignés :
BE CH DE FR GB IT LI NL SE

(56) Documents cités :
FR A 2 096 412
FR E 82 964
GB A 801 565
GB A 805 824
US A 2 750 894
US A 3 090 544

(73) Titulaire : **JEUMONT-SCHNEIDER Société anonyme dite :**
**31-32, Quai de Dion Bouton**
**F-92811 Puteaux Cedex (FR)**

(72) Inventeur : **Drevet, Michel**
**65, Boulevard des Belges**
**F-69008 Lyon (FR)**
Inventeur : **Trouillet, Jean**
**1, Place Desoil**
**B-6540 Fontaine-Valmont (BE)**

(74) Mandataire : **Lejet, Christian et al**
**31-32, Quai de Dion Bouton**
**F-92811 Puteaux Cedex (FR)**

Jouve, 18, rue St-Denis, 75001 Paris, France

## Palier hydrostatique à sécurité de fonctionnement pour une pompe

La présente invention concerne les paliers hydrostatiques pour pompes à fluide sous pression et alimentés au moyen du fluide pompé et, plus précisément, un tel palier dont le fonctionnement est assuré quelles que soient les conditions régnant dans la pompe.

De manière générale, de telles pompes comprennent une roue à aubes solidaire d'un arbre vertical entraîné en rotation au moyen d'un moteur électrique, la jante de la roue prenant normalement appui au moyen d'un palier hydrostatique sur la surface d'un diffuseur. Ce dernier palier permet d'augmenter la vitesse critique de l'arbre par élimination de tout porte-à-faux résiduel. Un tel palier est notamment décrit dans le brevet GB. 805 824.

Ce palier est alimenté par du fluide prélevé dans le compartiment où règne normalement la plus haute pression, fluide qui s'échappe ensuite vers le compartiment où règne normalement la plus basse pression.

Toutefois, en cas de défaillance de la pompe par exemple consécutive à une dépressurisation entraînant une inversion des pressions régnant dans les différents compartiments de la pompe, le sens d'écoulement normal du fluide peut se trouver inversé.

Le palier hydrostatique ne peut plus alors remplir ses fonctions et devient instable. Ce phénomène qui s'ajoute à la défaillance de la pompe, peut entraîner une détérioration notable des composants du palier.

La présente invention a pour but d'obvier à cet inconvénient au moyen d'un palier dont les alvéoles ménagés dans le coussinet soient toujours alimentés par le fluide provenant du compartiment où règne la plus haute pression, le fluide s'échappant ensuite vers le compartiment où règne la plus basse pression, quel que soit l'un ou l'autre compartiment.

Selon l'invention, les gicleurs d'alimentation en fluide à haute pression des alvéoles ménagés dans le coussinet du palier sont connectés en amont aux deux compartiments de la pompe dans lesquels se trouve le fluide sous deux pressions différentes, par l'intermédiaire de conduits et d'un clapet à bille commandé par la différence des pressions régnant dans ces compartiments et autorisant le passage du fluide en provenance du compartiment où règne la plus grande pression tout en interdisant toute circulation de fluide avec l'autre compartiment, des chambres de détente du fluide respectivement ménagées de part et d'autre des alvéoles dans le coussinet étant connectées en aval aux deux compartiments par l'intermédiaire de conduits et de clapets à bille commandés par la différence des pressions régnant dans les deux compartiments et autorisant l'échappement du fluide issu des chambres de détente vers le compartiment où règne la plus basse pression tout en interdisant toute circulation du fluide avec l'autre compartiment, de manière à maintenir l'alimentation en fluide de plus haute pression quel que soit le compartiment où règne cette plus haute pression, et l'échappement du fluide vers l'autre compartiment, en vue d'assurer le bon fonctionnement du palier dans toutes les conditions. Des chambres reliées par un conduit sont prévues de part et d'autre du coussinet, de telle manière qu'une basse pression y règne normalement, un joint séparant l'une d'elles et le compartiment où, en fonctionnement normal, règne la plus haute pression.

L'invention sera mieux comprise et d'autres buts, avantages et caractéristiques de celle-ci apparaîtront plus clairement à la lecture de la description qui suit d'un mode de réalisation, description à laquelle trois planches de dessins sont annexées.

La figure 1 représente schématiquement en demi-coupe axiale partielle une pompe à fluide sous pression pourvue d'un palier hydrostatique conforme à la présente invention.

La figure 2 représente, en demi-coupe axiale agrandie, selon un premier plan, le dispositif d'alimentation en fluide sous pression du palier de la figure 1.

La figure 3 représente, en demi-coupe axiale agrandie selon un second plan, le dispositif d'échappement du fluide du palier de la figure 1.

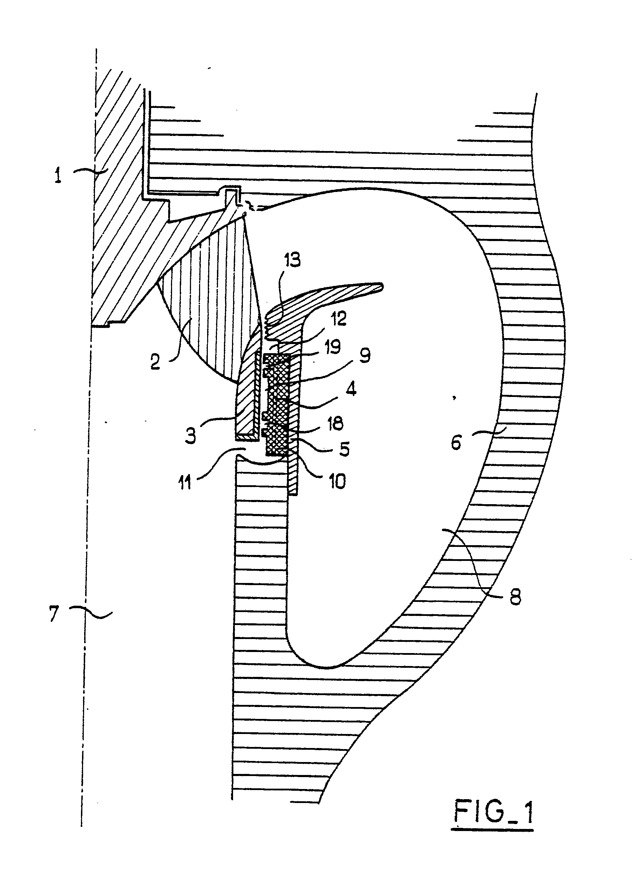

En référence maintenant à la figure 1, l'arbre 1 est solidaire d'une roue à aubes 2 dont la jante 3 prend appui par l'intermédiaire du coussinet 4 d'un palier hydrostatique sur un diffuseur 5 fixe solidaire d'une volute 6.

En fonctionnement normal, le fluide se trouvant dans le compartiment 7 est à basse pression par rapport au fluide se trouvant dans le compartiment 8.

Les alvéoles 9 ménagés dans le coussinet 4 du palier sont alimentés au moyen d'un fluide prélevé dans le compartiment 8 et s'échappant vers le compartiment 7. Dans ce but, un conduit 10 est ménagé dans le coussinet 4 entre les chambres 11 et 12, de telle manière qu'une basse pression règne de part et d'autre du coussinet 4 en fonctionnement normal. Un joint 13, par exemple à labyrinthe, est prévu entre la chambre 12 et le compartiment 8, de manière à éviter toute fuite de fluide et, par suite, une augmentation de la pression dans la chambre 12.

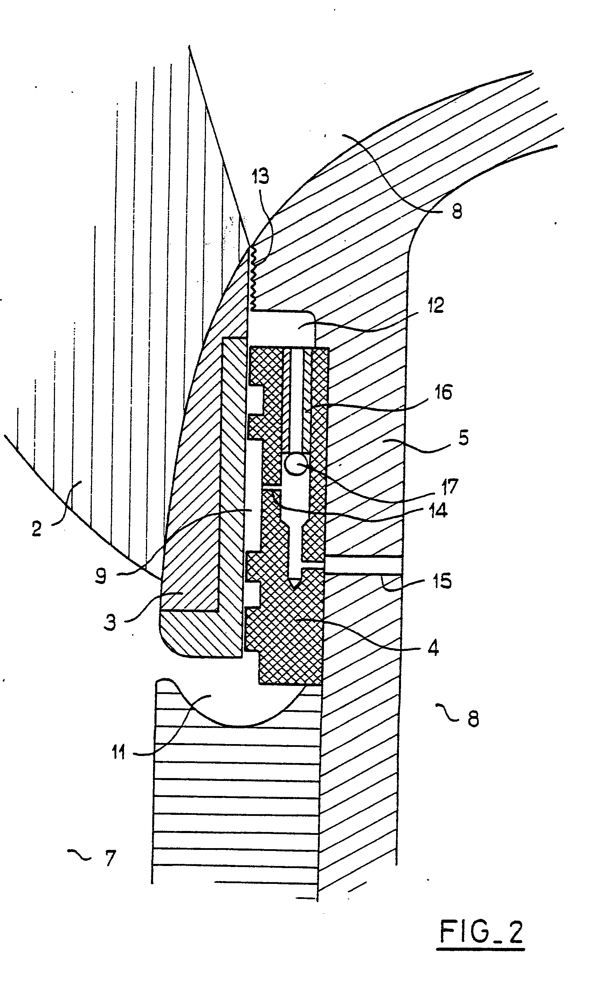

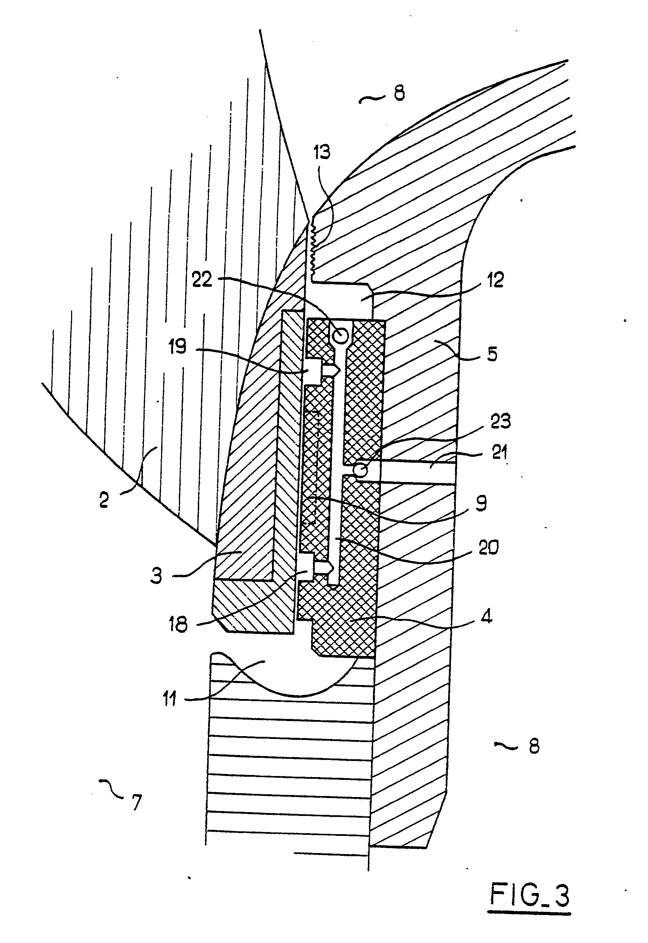

En référence maintenant aux figures 2 et 3 représentant en coupes agrandies selon deux plans axiaux différents le palier conforme à l'invention, les alvéoles 9 ménagés dans le coussinet 4 sont reliés à des gicleurs 14 connectés, en amont, aux deux compartiments 8, par l'intermédiaire du conduit 15, et 7, par l'intermédiaire du conduit 16, de la chambre 12 et du conduit 10 (non représenté sur les figures 2 et 3).

La circulation du fluide dans les deux conduits 15 et 16 est réglementée au moyen d'une bille 17 coopérant avec des étranglements et constituant un clapet à bille commandé par la différence des pressions régnant dans les deux compartiments 7 et 8.

De manière évidente, tant qu'une basse pression règne dans la chambre 12 et haute pression dans le compartiment 8, la bille 17 se place de manière à fermer le conduit 16 et à n'autoriser le passage du fluide qu'en provenance du compartiment 8.

En fonctionnement anormal, c'est-à-dire en cas d'inversion des pressions dans les compartiments 7 et 8, la bille 17 vient fermer le conduit 15 et le fluide à haute pression est prélevé du compartiment 7 par l'intermédiaire de la chambre 11, du conduit 10, de la chambre 12, et du conduit 16.

On constate donc que les alvéoles restent ainsi alimentés par le fluide de plus haute pression quel que soit le compartiment 7 ou 8 où règne cette plus haute pression.

Mais le fluide alimentant les alvéoles 9 doit s'échapper, en se détendant vers le compartiment de plus basse pression, comme illustré figure 3.

Des chambres de détente 18 et 19 sont ménagées à cet effet dans le coussinet 4 de part et d'autre des alvéoles 9 de manière à permettre cet échappement du fluide quelles que soient les conditions de pression régnant dans les chambres 11 et 12. Ces deux chambres de détente 18 et 19 sont respectivement connectées en aval à un conduit 20 qui est relié aux deux compartiments 7, par l'intermédiaire de la chambre 12 du conduit 10 et de la chambre 11, et 8, par l'intermédiaire du conduit 21.

Deux billes 22 et 23 judicieusement disposées constituent deux clapets à bille en collaboration avec les étranglements prévus à cet effet dans les conduits respectifs 20 et 21. De ce fait, en fonctionnement normal, c'est-à-dire lorsqu'une basse pression règne dans le compartiment 7 et qu'une haute pression règne dans le compartiment 8, le fluide s'échappant par les chambres de détente 18 et 19 est collecté dans le conduit 20 et amené à la chambre 12 dont la bille 22 assure le passage. La bille 23 ferme le conduit 21 grâce à la haute pression régnant dans le compartiment 8.

En fonctionnement anormal, c'est-à-dire lorsque les pressions sont inversées dans les deux compartiments 7 et 8, la bille 23 ouvre l'accès au compartiment 8 tandis que la bille 22 ferme le conduit 20 et interdit toute circulation de fluide avec la chambre 12 où règne alors une haute pression.

On constate donc aisément que l'échappement du fluide est assuré quelles que soient les conditions de pressions régnant dans les deux compartiments.

### Revendication

Palier hydrostatique à sécurité de fonctionnement pour pompe à fluide sous pression du type ayant une roue à aubes (2) dont la jante (3) prend appui sur la surface d'un diffuseur (5) au moyen dudit palier qui est disposé entre deux compartiments (7, 8) de la pompe dans lesquels se trouve le fluide sous deux pressions différentes, ledit palier incluant un coussinet (4) dans lequel est ménagée une pluralité d'alvéoles 9) alimentés par ledit fluide au moyen de gicleurs (14), caractérisé en ce que lesdits gicleurs (14) sont connectés en amont auxdits deux compartiments (7, 8) par l'intermédiaire de conduits (16, 15) et d'un clapet à bille (17) commandé par la différence des pressions régnant dans lesdits compartiments (7, 8) et autorisant le passage dudit fluide en provenance du compartiment où règne la plus grande pression tout en interdisant toute circulation de fluide avec l'autre compartiment, des chambres de détente (18, 19) dudit fluide respectivement ménagées de part et d'autre desdits alvéoles (9) dans ledit coussinet (4) étant connectées en aval auxdits deux compartiments (7, 8) par l'intermédiaire de conduits (20, 21) et de clapets à bille (22, 23) commandés par la différence des pressions régnant dans lesdits compartiments et autorisant l'échappement dudit fluide issu desdites chambres de détente (18, 19) vers le compartiment où règne la plus basse pression tout en interdisant toute circulation dudit fluide avec l'autre compartiment, de manière à maintenir l'alimentation en fluide de plus haute pression, quel que soit le compartiment où règne ladite plus haute pression, et l'échappement dudit fluide vers l'autre compartiment, en vue d'assurer le bon fonctionnement dudit palier dans toutes les conditions, des chambres (11, 12) reliées par un conduit (10) étant prévues de part et d'autre dudit coussinet (4), de telle manière qu'une basse pression y règne normalement, un joint (13) séparant l'une d'elles et le compartiment (8) où, en fonctionnement normal, règne la plus haute pression.

### Claim

Hydrostatic bearing which operates reliably, for a pressure-fluid pump of the type having a bladed wheel (2) whose rim (3) bears on the surface of a diffuser (5) by means of the said bearing which is situated between two compartments (7, 8) of the pump (5), the fluid being at two different pressures in the said compartments, the said bearing including a bearing element (4) in which are formed a plurality of recesses (9) supplied by the said fluid by means of nozzles (14), characterised in that the said nozzles (14) are connected upstream to the said two compartments (7, 8) by way of ducts (16, 15) and a ball valve (17) controlled by the difference between the pressures prevailing in the said compartments (7, 8) and allowing passage of the said fluid from the compartment wherein the higher pressure prevails whilst preventing any fluid circulation arrangement with the other compartment, expansion chambers (18, 19) for the said fluid respectively arranged on either side of the said recesses (9) in the said bearing element (4) being connected downstream to the said two compartments (7, 8) by way of ducts (20, 21) and ball valves (22, 23) controlled by the difference in the pressures occurring in the said compartments and allowing the discharge of said fluid issuing from the said expansion chambers (18, 19) towards the compartment wherein the lower pressure prevails whilst preventing any fluid circulation arrangement with the other compartment, in such a manner as to maintain the supply of the higher-pressure fluid whatever the compartment in which the said higher pressure prevails, and the outflow of the said fluid towards the other compartment, with the object of ensuring the satisfactory operation of the said bearing under all conditions, chambers (11, 12) connected by a duct (10) being provided on either side of the said bearing element (4) in such a manner that a low pressure prevails therein normally, a sealing device (13) separating one of them from the compartment (8) wherein, in normal operation, the higher pressure prevails.

**Anspruch**

Funktionssicheres hydrostatisches Lager für eine mit unter Druck stehendem Fluid arbeitende Pumpe von der Art mit einem Schaufelrad (2), dessen Felge (3) sich auf der Oberfläche eines Diffusors (5) über das genannte Lager abstützt, welches zwischen zwei Abteilen (7, 8) der Pumpe angeordnet ist, in welchen das Fluid sich unter zwei verschiedenen Drücken befindet, wobei das genannte Lager eine Lagerbüchse (4) umfaßt, in der eine Mehrzahl von Hohlräumen (9) angebracht sind, die über Düsen (14) mit dem Fluid versorgt werden, dadurch gekennzeichnet, daß die genannten Düsen (14) auf der stromaufwärts gelegenen Seite mit den beiden Abteilen (7, 8) verbunden sind über Leitungen (16, 15) und ein Kugelventil (17), das durch die Druckdifferenz zwischen den beiden Abteilen (7, 8) gesteuert ist und den Durchgang des Fluids aus demjenigen Abteil, in welchem der höhere Druck herrscht, zuläßt, während es jede Fluidzirkulation mit dem anderen Abteil unterbindet, wobei Entspannungskammern (18, 19) zur Entspannung des Fluids jeweils auf beiden Seiten der Hohlräume (9) in der Lagerbüchse (4) auf der stromabwärts gelegenen Seite mit den beiden Abteilen (7, 8) verbunden sind über Leitungen (20, 21) und Kugelventile (22, 23), welche durch die Druckdifferenz zwischen den genannten Abteilen gesteuert sind und das Abfließen des aus den Entspannungskammern (18, 19) kommenden Fluids zu demjenigen Abteil zulassen, in welchem der niedrigere Druck herrscht, während sie jede Fluidzirkulation mit dem anderen Abteil unterbinden, so daß die Versorgung mit dem unter dem höheren Druck stehenden Fluid aufrechterhalten wird, gleich in welchem Abteil der höhere Druck herrscht, und das Abströmen des Fluids zu dem anderen Abteil aufrechterhalten wird, um die einwandfreie Funktion des Lagers unter allen Bedingungen zu gewährleisten, wobei durch eine Leitung (10) miteinander verbunden Kammern (11, 12) auf beiden Seiten der Lagerbüchse (4) vorgesehen sind, so daß dort normalerweise ein niedriger Druck herrscht, wobei eine Dichtung (13) die eine von ihnen und dasjenige Abteil (8), wo im Normalbetrieb der höhere Druck herrscht, voneinander trennt.

FIG_1

FIG_2

FIG_3